# EUROPÄISCHE PATENTSCHRIFT

(11) **EP 4 655 950 B1**
(45) Veröffentlichungstag und Bekanntmachung des Hinweises auf die Patenterteilung: **18.11.2026**
(21) Anmeldenummer: 23814455.4
(22) Anmeldetag: 29.11.2023
(51) Int. Cl.: H04R 1/02

(54) **LAUTSPRECHERINNENBELEUCHTUNG, LAUTSPRECHER MIT DERSELBEN SOWIE KRAFTFAHRZEUG MIT EINEM SOLCHEN LAUTSPRECHER**
LOUDSPEAKER INTERIOR LIGHTING, LOUDSPEAKER WITH THE SAME AND VEHICLE WITH SUCH A LOUDSPEAKER
ÉCLAIRAGE INTÉRIEUR D'UN HAUT-PARLEUR, HAUT-PARLEUR AVEC CELUI-CI ET VÉHICULE ÉQUIPÉ D'UN TEL HAUT-PARLEUR

(30) Priorität: 27.01.2023 DE 102023000245
(43) Veröffentlichungstag der Anmeldung: 03.12.2025
(73) Patentinhaber: Mercedes-Benz Group AG, 70372 Stuttgart (DE)
(72) Erfinder: SEIDEL, Gerhard, 71717 Beilstein (DE)
(74) Vertreter: Novagraaf Group
(86) Internationale Anmeldenummer: PCT/EP2023/083609
(87) Internationale Veröffentlichungsnummer: WO 2024/156404

(56) Entgegenhaltungen:
- EP-B1- 3 509 318
- WO-A1-2016/058652
- CN-U- 216 905 210
- DE-A1- 102016 122 078
- GB-A- 2 418 561

## Beschreibung

Die Erfindung betrifft eine Lautsprecherinnenbeleuchtung zur Hinterleuchtung einer zumindest eine Öffnung aufweisenden Lautsprecherabdeckung eines Lautsprechers, beispielsweise eines Lautsprechergitters, gemäß dem Oberbegriff von Anspruch 1. Die Erfindung betrifft insbesondere einen mit einer solchen Lautsprecherinnenbeleuchtung ausgestatteten Lautsprecher sowie weiter insbesondere ein mit zumindest einem solchen Lautsprecher ausgerüstetes Kraftfahrzeug.

Lautsprecher besitzen in der Regel eine von außen her ersichtliche Lautsprecherabdeckung, beispielsweise in Form eines Lautsprechergitters, durch das erzeugte akustische Signale zur Umgebung hin durchtreten. Aus ästhetischen Gründen und zur Steigerung des Kundenkomforts können Lautsprecher mit einer Innenbeleuchtung ausgerüstet werden, anhand welcher die Lautsprecherabdeckung hinterleuchtet wird. Bei Lautsprecherabdeckungen aus dünnem Blech, feinem Kunststoff- oder Textilmaterial ist eine wünschenswerte gleichmäßige und vollflächige Hinterleuchtung allerdings mit relativ hohem konstruktiven Aufwand verbunden oder nicht zu realisieren, da für eine entsprechende Hinterleuchtung aktuell Lichtleiter und Streumedien (z.B. eine Streuscheibe) erforderlich sind, die aufgrund ihrer relativ großen Abmessungen Licht nur seitlich, insbesondere zwischen einer Lautsprechereinheit des Lautsprechers und der Lautsprecherabdeckung, in den Lautsprecher einkoppeln können, was für eine gleichmäßige Hinterleuchtung ungünstig ist. Außerdem sind die für die Hinterleuchtung eingesetzten Lichtleiter und Streuscheiben hinsichtlich eines geforderten Schalldurchlass des Lautsprechers ungünstig, da sie in der Regel massive, kompakte Körper aus transparenten oder transluzenten Material sind, die erzeugte akustische Signale stark dämpfen können.

Aus DE 10 2012 013 105 A1 und DE 10 2012 006 712 A1 sind leuchtende Gewebe bekannt, die unter anderem in Kraftfahrzeugen zur Ambientebeleuchtung eingesetzt werden.

Aus der DE 10 2016 120 078 A1 ist eine Lautsprecherinnenbeleuchtung bekannt, die zur Hinterleuchtung einer zumindest eine Öffnung aufweisenden Lautsprecherabdeckung eines Lautsprechers, insbesondere ein Lautsprechergitter, dient und hierfür ein Leuchtmittel aufweist, das zum Emittieren von Licht eingerichtet ist und zwischen einer Lautsprechereinheit des Lautsprechers und der Lautsprecherabdeckung angeordnet werden kann.

Aus der WO 2016/058652 A1 ist eine Lautsprecherinnenbeleuchtung zur Hinterleuchtung einer zumindest eine Öffnung aufweisenden Lautsprecherabdeckung eines Lautsprechers bekannt, bei der die Abdeckung durch Reflektion von Licht an einem Vlies bzw. Gewebe beleuchtet wird.

Aus der CN 21 6 905 210 U ist eine Lautsprecherabdeckung bekannt, die mittels eines schalldurchlässigen Leuchtgewebes gebildet ist, das von Licht emittierenden, beleuchtbaren oder selbstleuchtenden Fäden gebildet ist oder diese aufweist.

Aus der EP 3 509 318 B1 ist eine beleuchtete Lautsprecherabdeckung bekannt, die selbst Leuchtmittel enthält.

Aus der GB 2 418 561 A ist eine Lautsprecherinnenbeleuchtung zur Hinterleuchtung einer zumindest eine Öffnung aufweisenden Lautsprecherabdeckung bekannt, bei der in einer Schichtstruktur ein elektrolumineszenter Leuchtstoff zwischen zwei Elektrodenschichten an der Lautsprecherabdeckung angeordnet ist.

Die Aufgabe der Erfindung liegt darin, eine verbesserte oder zumindest eine andere Ausführungsform einer Lautsprecherinnenbeleuchtung bereitzustellen. Insbesondere soll ein Lautsprecher mit einer entsprechenden Lautsprecherinnenbeleuchtung angegeben werden. Weiter insbesondere soll ein Kraftfahrzeug mit einem solchen Lautsprecher bereitgestellt werden.

Bei der vorliegenden Erfindung wird diese Aufgabe insbesondere durch die Gegenstände der unabhängigen Ansprüche gelöst. Vorteilhafte Ausführungsformen sind Gegenstand der abhängigen Ansprüche und der Beschreibung.

Der Grundgedanke der Erfindung liegt darin, die Hinterleuchtung einer Lautsprecherabdeckung eines Lautsprechers anhand einer Lautsprecherinnenbeleuchtung mit Leuchtgewebe zu realisieren.

Hierzu schlägt die Erfindung eine Lautsprecherinnenbeleuchtung für einen Lautsprecher vor, die zur Hinterleuchtung einer zumindest eine Öffnung aufweisenden Lautsprecherabdeckung des Lautsprechers, insbesondere eines Lautsprechergitters, eingerichtet ist. Die erfindungsgemäße Lautsprecherinnenbeleuchtung zeichnet sich durch ein schalldurchlässiges, zum Emittieren von Licht eingerichtetes, zwischen einer Lautsprechereinheit des Lautsprechers zum Bereitstellen akustischer Signale und der Lautsprecherabdeckung anordenbares oder angeordnetes Leuchtgewebe aus, das von Licht emittierenden, selbstleuchtenden oder beleuchtbaren Fäden gebildet ist oder dieselben aufweist.

Anhand dem Leuchtgewebe der vorgeschlagenen Lautsprecherinnenbeleuchtung ist eine nicht wie seither nur punktuelle, sondern eine, insbesondere durch die Abmessungen des Leuchtgewebes vorgegebene, flächige, d.h. insbesondere diffuse, und in alle Richtungen hin gleichmäßige Beleuchtung realisierbar. Ferner baut das Leuchtgewebe aufgrund seiner für Gewebe typischen flächigen Gestalt relativ kompakt, sodass es leichtgewichtig und relativ einfach in den Lautsprecher integrierbar ist sowie die übrigen Komponenten des Lautsprechers nahezu nicht beeinflusst. Das Leuchtgewebe ist insbesondere so schalldurchlässig gestaltet, dass die von der Lautsprechereinheit des Lautsprechers bereitgestellten akustischen Signale praktisch nicht gedämpft werden, sodass einem Nutzer des Lautsprechers - trotz der integrierten Hinterleuchtung - ein gleichbleibend angenehmer akustischer Klangeffekt geboten werden kann. Dadurch ist insgesamt eine vorteilhafte Lautsprecherinnenbeleuchtung bereitgestellt, anhand der eine gleichmäßige Hinterleuchtung der Lautsprecherabdeckung des Lautsprechers und ein für einen Nutzer des Lautsprechers angenehmer optischer Lichteffekt sowie ein optimales akustisches Erlebnis realisiert werden kann.

Die Erfindung versteht den Begriff "emittieren" im Sinne von abstrahlen, ausstrahlen oder aussenden. Ferner sind die besagten selbstleuchtenden Fäden gemäß der Erfindung solche Fäden, die Licht selbst erzeugen und emittieren können, beispielsweise unter Zuhilfenahme von geeigneten Betriebsmitteln wie einer Energiequelle. Unter beleuchtbaren Fäden versteht die Erfindung hingegen solche Fäden, die selbst kein Licht erzeugen können. Jedoch sind die beleuchtbaren Fäden beispielswiese anhand einer Lichtquelle beleuchtbar und zweckmäßigerweise zum Einkoppeln, Leiten und Emittieren von Licht eingerichtet.

Das Leuchtgewebe ist zweckmäßigerweise von flächiger Gestalt, so wie es für Gewebe typisch ist. D.h. das Leuchtgewebe ist ein Flächengebilde. Außerdem kann das Leuchtgewebe gleichmäßig gestaltet sein und insbesondere eine gitterförmige Struktur aufweisen, die durch die selbstleuchtenden oder beleuchtbaren Fäden definiert ist. Die selbstleuchtenden oder beleuchtbaren Fäden können miteinander verbunden, insbesondere verwebt, sein. Die selbstleuchtenden oder beleuchtbaren Fäden können beispielsweise in einem Kreuzmuster angeordnet sein, bei dem sich die selbstleuchtenden oder beleuchtbaren Fäden zweckmäßigerweise in einem Winkel von etwa oder genau 90° kreuzen. Zwischen den sich kreuzenden selbstleuchtenden oder beleuchtbaren Fäden können Gewebeöffnungen begrenzt sein, anhand denen ein praktisch ungehindertes Durchtreten von bereitgestellten akustischen Signalen möglich sein kann.

Weiterhin kann vorgesehen sein, dass die Lautsprecherinnenbeleuchtung zumindest eine Lichtquelle zum Bereitstellen von Licht sowie einen Lichtleiter zum Leiten von Licht von der zumindest eine Lichtquelle zum Leuchtgewebe aufweist, wobei ein Geweberand des Leuchtgewebes zumindest abschnittweise oder vollständig anhand dem Lichtleiter umspritzt ist. Die zumindest eine Lichtquelle kann beispielsweise durch eine Leuchtdiode (LED) oder ein anderes geeignetes Leuchtmittel realisiert sein. Zweckmäßigerweise stellt die zumindest eine Lichtquelle Licht insbesondere in einem für das menschliche Auge sichtbaren Wellenlängenbereich, beispielsweise von 400nm bis 800nm, bereit. Die zumindest eine Lichtquelle und der Lichtleiter sind zweckmäßigerweise so gestaltet, dass das bereitgestellte Licht in den Lichtleiter einkoppeln, im Lichtleiter geleitet und dann in das Leuchtgewebe, d.h. insbesondere in die für diese Ausführungsform der Erfindung relevanten beleuchtbaren Fäden des Leuchtgewebes, ausgekoppelt werden kann. D.h. der Lichtleiter fungiert sozusagen als Koppelglied zwischen der zumindest einen Lichtquelle und dem Leuchtgewebe. Dass der Geweberand des Leuchtgewebes zumindest abschnittweise oder vollständig anhand dem Lichtleiter umspritzt ist bedeutet, dass der Geweberand des Leuchtgewebes, d.h. insbesondere die für diese Ausführungsform der Erfindung relevanten beleuchtbaren Fäden in diesem Bereich, abschnittsweise oder vollständig im Lichtleiter eingebettet sind. Dadurch kann Licht vom Lichtleiter relativ einfach, insbesondere relativ verlustarm und gleichmäßig, an das Leuchtgewebe übergeben, d.h. ausgekoppelt, werden. Der Lichtleiter ist zweckmäßigerweise als Spritzgussteil realisiert. Außerdem lässt sich das Leuchtgewebe anhand dem angespritzen Lichtleiter relativ einfach handhaben, sodass beispielsweise die Montage der Lautsprecherinnenbeleuchtung vereinfacht ist.

Weiterhin kann vorgesehen sein, dass der Lichtleiter ringförmig gestaltet ist, insbesondere vollringförmig, und/oder dass der Lichtleiter das Leuchtgewebe zumindest abschnittsweise oder vollständig umläuft und/oder dass der Lichtleiter eine oder mehrere Einkoppelstellen zum Einkoppeln von Licht aufweist. Die besagte, zumindest eine Lichtquelle kann an einer Bestückungsfläche der Einkoppelstelle angeordnet sein, wobei das bereitgestellte Licht zweckmäßigerweise anhand der Bestückungsfläche der Einkoppelstelle in den Lichtleiter einkoppelbar ist. Dadurch sind bevorzugte Merkmale des Lichtleiters angegeben.

Zweckmäßig ist weiterhin, wenn die besagten beleuchtbaren Fäden Kettfäden und weiterhin zum Verbinden der Kettfäden Schussfäden aufweisen. Das Leuchtgewebe bildet demnach zweckmäßigerweise ein zwei Fadensystem. Die Kettfäden und die Schussfäden können sich kreuzend angeordnet sein, sodass ein Gittermuster gebildet ist. Die Kettfäden und die Schussfäden können von lichtleitenden Fasern, die auch als optische Fasern bezeichnet werden können, gebildet sein oder dieselben aufweisen. Alternativ können lediglich die Kettfäden von solchen lichtleitenden Fasern gebildet sein oder dieselben aufweisen, während die Schussfäden von nichtlichtleitenden Fasern gebildet sein oder dieselben aufweisen können. Das die Kettfäden und/oder die Schussfäden von lichtleitenden Fasern gebildet sind, kann bedeuten, dass ein Kettfaden und/oder ein Schussfaden aus genau einer lichtleitenden Faser oder einer Vielzahl von beispielsweise gebündelten lichtleitenden Fasern besteht. Anhand von lichtleitenden Fasern kann Licht geleitet werden. Anhand von nichtlichtleitenden Fasern kann Licht nicht geleitet werden. Die nichtlichtleitenden Fasern können im Vergleich mit den leitenden Fasern eine relativ hohe Festigkeit aufweisen, sodass mit deren Hilfe, also mit den Schussfäden, das Leuchtgewebe relativ robust gestaltet werden kann.

Zweckmäßig ist weiterhin, wenn die besagten Kettfäden und die besagten Schussfäden im vom Lichtleiter umspritzten Geweberand des Leuchtgewebes zum Lichtleiter hin orientierte, freie Enden aufweisen. Die freien Enden können stirnseitige Axialenden der Kettfäden und Schussfäden sein. Anhand der freien Enden kann von dem Lichtleiter kommendes Licht relativ verlustarm in das Leuchtgewebe einkoppeln. In die Kettfäden und die Schussfäden eingekoppeltes Licht kann über deren Mantelflächen wieder auskoppeln. Weiterhin kann vorgesehen sein, dass die Kettfäden mäandrierend durch das Leuchtgewebe verlaufen und im vom Lichtleiter umspritzten Geweberand des Leuchtgewebes Schlaufen bilden. In diesem Fall können die Schussfäden der beleuchtbaren Fäden in dem Geweberand des Leuchtgewebes zum Lichtleiter hin orientierte, freie Enden aufweisen, die vom Lichtleiter umspritzt sind. Alternativ können auch die Schussfäden mäandrierend durch das Leuchtgewebe verlaufen und im vom Lichtleiter umspritzten Geweberand des Leuchtgewebes Schlaufen bilden.

Weiter zweckmäßig ist, wenn der Lichtwellenleiter einen Kern mit einem relativ hohen Lichtbrechungsindex und einen den Kern einfassenden Kernmantel mit einem relativ niedrigen Lichtbrechungsindex aufweist. Dadurch kann Licht relativ einfach in den Lichtwellenleiter eingekoppelt und durch denselbe(n) hindurch geleitet werden. Der Lichtwellenleiter kann weiterhin an seiner Mantelfläche eine angeordnete Struktur und/oder Rauigkeit aufweisen, anhand der Licht einfach in den Lichtwellenleiter ein- oder auskoppelbar ist. Außerdem kann der Lichtwellenleiter eingebrachte streuende Störungen, zum Beispiel Partikel oder dergleichen, aufweisen. Diese Störungen können insbesondere im Bereich einer Kern-Mantel-Grenzfläche zwischen dem Kern und dem Kernmantel eingebracht sein und das Ein- und/oder Auskoppeln von Licht begünstigen.

Die lichtleitenden Fasern oder die Kettfäden und die Schussfäden sind bevorzugt aus einem Lichtleiter-Material hergestellt, beispielswese ein Polymer. Die lichtleitenden Fasern oder die Kettfäden und die Schussfäden können ebenfalls einen Kern mit einem relativ hohen Lichtbrechungsindex und einen den Kern einfassenden Kernmantel mit einem relativ niedrigen Lichtbrechungsindex aufweisen. Außerdem können die lichtleitenden Fasern oder die Kettfäden und die Schussfäden eingebrachte streuende Störungen, zum Beispiel Partikel oder dergleichen, aufweisen. Diese Störungen können insbesondere im Bereich einer Kern-Mantel-Grenzfläche zwischen dem Kern und dem Kernmantel eingebracht sein und das Ein- und/oder Auskoppeln von Licht begünstigen.

Zweckmäßig ist weiterhin, wenn die besagten selbstleuchtenden Fäden von lichtemittierenden Fasern gebildet sind oder dieselben aufweisen. Lichtemittierende Fasern sind zweckmäßigerweise solche Fasern, die von sich aus leuchten oder sich zum Leuchten anregen lassen, beispielsweise wenn sie mit einer Energiequelle verbunden werden. Beispielsweise können die selbstleuchtenden Fäden zum Erzeugen und Emittieren von Licht mit einer Energiequelle, insbesondere einer Stromquelle, verbunden sein. Dadurch kommt die Lautsprecherinnenbeleuchtung ohne zusätzliche Lichtquellen aus, wodurch sich eine besonders kompakte Lautsprecherinnenbeleuchtung bzw. ein besonders kompakter Lautsprecher realisieren lässt. Das die selbstleuchtenden Fäden von lichtemittierenden Fasern gebildet sind, kann zweckmäßigerweise bedeuten, dass ein selbstleuchtender Faden aus genau einer lichtemittierenden Faser oder einer Vielzahl von beispielsweise gebündelten lichtemittierenden Fasern besteht.

Zweckmäßigerweise ist vorgesehen, dass die selbstleuchtenden Fäden Kettfäden und zum Verbinden derselben Schussfäden aufweisen, wobei die Kettfäden und Schussfäden in einem Geweberand des Leuchtgewebes freie Enden aufweisen. Alternativ kann vorgesehen sein, dass die Schussfäden in einem Geweberand des Leuchtgewebes freie Enden aufweisen und die Kettfäden mäandrierend durch das Leuchtgewebe verlaufen und im Geweberand Schlaufen bilden.

Die Lautsprecherinnenbeleuchtung kann beispielsweise eine farbige Hinterleuchtung bereitstellen. Ferner lassen sich auch Farbwechsel oder Farbverläufe realisieren.

Weiterhin ist es denkbar, dass die Hinterleuchtung sequentielle oder pulsierte Lichtinszenierung generiert, zum Beispiel indem die Lichtquelle(n) an- und ausgeschaltet werden. Weiterhin sind anhand der Lautsprecherinnenbeleuchtung flackernde Hintergrundbeleuchtungen, Farbwechsel zum Rhythmus von Musik, Signal- und Warnsowie Zusatzleuchtfunktionen, wie insbesondere Auffind- und Ambientbeleuchtung, möglich.

Gemäß einem weiteren Grundgedanken der Erfindung ist ein Lautsprecher vorgesehen.

Dieser besitzt eine Lautsprechereinheit, die zum Bereitstellen von akustischen Signalen eingerichtet ist und zumindest einen Lautsprecherkorb aufweist, eine an der Lautsprechereinheit, insbesondere im Bereich des Lautsprecherkorbs, angeordnete oder abgestützte Stützstruktur, insbesondere eine Streben-Stützstruktur und bevorzugt eine Kreuz-Streben-Stützstruktur, eine zumindest eine Öffnung aufweisende Lautsprecherabdeckung, beispielsweise ein Lautsprechergitter, die den Lautsprecherkorb und insbesondere die Stützstruktur überspannt und an der Lautsprechereinheit angeordnet ist sowie eine nach der vorhergehenden Beschreibung ausgeführte Lautsprecherinnenbeleuchtung. Diese ist zwischen der Lautsprecherabdeckung einerseits und der Stützstruktur andererseits fixiert, insbesondere verklemmt, sodass von der Lautsprecherinnenbeleuchtung bereitgestelltes flächiges, d.h. insbesondere diffuses, Licht gleichmäßig durch die zumindest eine Öffnung der Lautsprecherabdeckung zu einer Umgebung des Lautsprechers leuchten kann. Dadurch ist ein vorteilhafter Lautsprecher mit hinterleuchteter Lautsprecherabdeckung angegeben. Die zumindest eine Öffnung der Lautsprecherabdeckung kann insbesondere eine Perforation bilden und/oder eine Designöffnung wie Muster, Schriftzüge oder dergleichen umfassen.

Gemäß einem weiteren Grundgedanken der Erfindung ist ein Kraftfahrzeug vorgesehen, das zumindest einen Lautsprecher gemäß der vorstehend beschriebenen Art aufweist. Der besagte Lautsprecher kann im Kraftfahrzeug für alle gängigen Einbauarten genutzt werden, beispielsweise als hinterleuchteter Lautsprecher im Türbelag des Kraftfahrzeugs oder als hinterleuchteter Lautsprecher in der Hutablage des Kraftfahrzeugs oder als eigenständige Lautsprecherbox des Kraftfahrzeugs.

Zusammenfassend betrifft die Erfindung zweckmäßigerweise eine Lautsprecherinnenbeleuchtung zur Hinterleuchtung einer zumindest eine Öffnung aufweisenden Lautsprecherabdeckung eines Lautsprechers, insbesondere eines Lautsprechergitters. Wesentlich ist, dass die Lautsprecherinnenbeleuchtung ein schalldurchlässiges, zum Emittieren von Licht eingerichtetes, zwischen einer Lautsprechereinheit des Lautsprechers und der Lautsprecherabdeckung anordenbares Leuchtgewebe aufweist, das von Licht emittierenden, beleuchtbaren oder selbstleuchtenden Fäden gebildet ist oder dieselben aufweist. Die Erfindung betrifft insbesondere einen Lautsprecher mit einer solchen Lautsprecherinnenbeleuchtung sowie weiter insbesondere ein Kraftfahrzeug mit zumindest einem solchen Lautsprecher.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: in einer perspektivischen Ansicht ein erfindungsgemäßes Kraftfahrzeug mit zumindest einem erfindungsgemäßen Lautsprecher, der mit einer erfindungsgemäßen Lautsprecherinnenbeleuchtung ausgestattet ist,
- Fig. 2: in einer Draufsicht einen erfindungsgemäßen Lautsprecher,
- Fig. 3: den Lautsprecher aus Fig. 2 in einer Schnittansicht gemäß der in Fig. 2 eingetragenen Linie A-A,
- Fig. 4: in einer Draufsicht eine erfindungsgemäße Lautsprecherinnenbeleuchtung,
- Fig. 5: einen in Fig. 4 anhand einem mit gestrichelter Linie eingezeichneten Kreis V gekennzeichneten Ausschnitt der Lautsprecherinnenbeleuchtung aus Fig. 4,
- Fig. 6: ein Ausschnitt wie in Fig. 5, jedoch bei einer weiteren Ausführungsform der Lautsprecherinnenbeleuchtung,
- Fig. 7: ein Ausschnitt wie in Fig. 5, jedoch bei einer weiteren Ausführungsform der Lautsprecherinnenbeleuchtung und zuletzt
- Fig. 8: einen Querschnitt eines Lichtwellenleiters der erfindungsgemäßen Lautsprecherinnenbeleuchtung gemäß einer weiteren Ausführungsform.

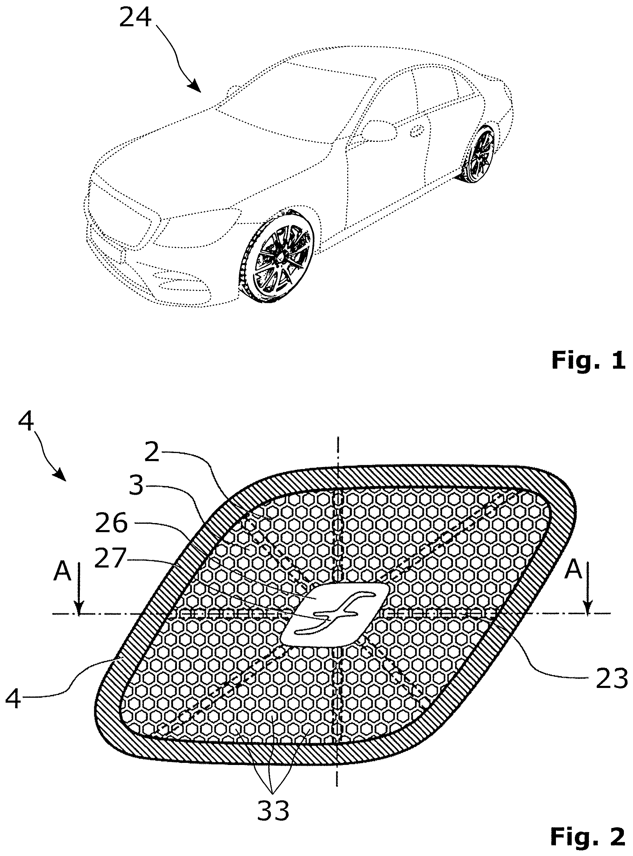

In Fig. 1 ist in einer perspektivischen Ansicht ein erfindungsgemäßes Kraftfahrzeug 24 illustriert, das mit zumindest einem erfindungsgemäßen Lautsprecher 4 ausgestattet ist, der eine erfindungsgemäße Lautsprecherinnenbeleuchtung 1 aufweist. Der besagte Lautsprecher 4 kann im Kraftfahrzeug 24 für alle gängigen Einbauarten genutzt werden, beispielsweise als hinterleuchteter Lautsprecher 4 im Türbelag des Kraftfahrzeugs 24.

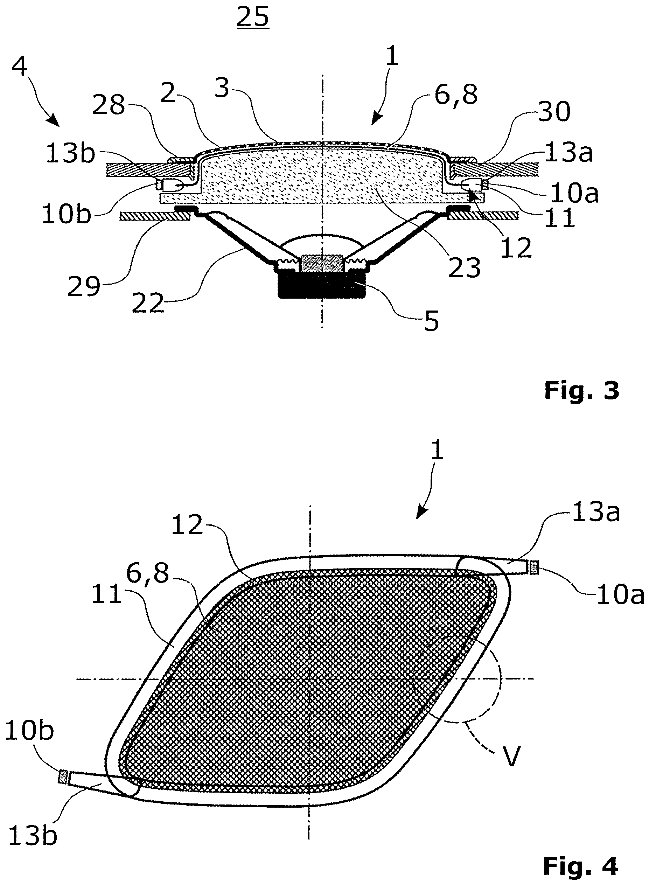

Der in Fig. 2 in einer Draufsicht und in Fig. 3 in einer Schnittansicht illustrierte erfindungsgemäße Lautsprecher 4 besitzt eine Lautsprechereinheit, die insgesamt mit der Bezugsziffer 5 bezeichnet und in herkömmlicher Weise zum Bereitstellen von akustischen Signalen eingerichtet ist. Der Lautsprecher 4 weist außerdem eine an einem Lautsprecherkorb 22 der Lautsprechereinheit 5, der sich an einem Unterbau 29 des Lautsprechers 4 abstützt, angeordnete oder abgestützte Stützstruktur 23 aus sich sternförmig kreuzenden Streben auf, sodass man von einer Streben-Stützstruktur oder einer Kreuz-Streben-Stützstruktur sprechen kann. Der Lautsprecher 4 umfasst weiterhin eine zumindest eine Öffnung 3 aufweisende Lautsprecherabdeckung 2, vorliegend nämlich ein Lautsprechergitter, wobei die besagten Öffnungen 3 exemplarisch als in einem geschlossenen Bereich 26 angeordnete Schriftzeichenöffnung 27 und als eine dieselbe einrahmende, Perforation 33 ausgeführt sind. Die Lautsprecherabdeckung 2 überspannt den Lautsprecherkorb 22 und die Stützstruktur 23 vollständig und ist über einen Rahmen 28 eines Gehäuses 30 des Lautsprechers 4 an der Lautsprechereinheit 5 angeordnet. Der Lautsprecher 4 weist weiterhin eine in Fig. 4 einzeln illustrierte erfindungsgemäße Lautsprecherinnenbeleuchtung 1 auf, die zwischen der Lautsprecherabdeckung 2 einerseits und der Stützstruktur 23 andererseits fixiert, vorliegend verklemmt, ist.

Die Lautsprecherinnenbeleuchtung 1 dient zur Hinterleuchtung der besagten Lautsprecherabdeckung 2 bzw. deren zumindest einen Öffnung 3 und weist ein schalldurchlässiges, zum Emittieren von Licht eingerichtetes, zwischen der Lautsprechereinheit 5 des Lautsprechers 4 und der Lautsprecherabdeckung 2 angeordnetes Leuchtgewebe 6 auf, das von Licht emittierenden, beleuchtbaren Fäden 8 gebildet ist oder dieselben aufweist. Das Leuchtgewebe 6 ist exemplarisch flächig und besitzt eine gitterförmige Struktur, die durch die sich kreuzend verwebten, beleuchtbaren Fäden 8 definiert ist. Die Lautsprecherinnenbeleuchtung 1 weist weiterhin zwei Lichtquellen 10a, 10b zum Bereitstellen von Licht, beispielsweise Leuchtdioden (LEDs), sowie einen ringförmig gestalteten Lichtleiter 11 zum Leiten von Licht von den beiden Lichtquellen 10a, 10b zum Leuchtgewebe 6 auf. Um von den beiden Lichtquellen 10a, 10b bereitgestelltes Licht in den Lichtleiter 11 einkoppeln zu können ist vorgesehen, dass der Lichtleiter 11 zwei separate Einkoppelstellen 13a, 13b besitzt, die jeweils eine Bestückungsfläche aufweisen, an die eine jeweilige Lichtquelle 10a, 10b montierbar ist und anhand der bereitgestelltes Licht in den Lichtleiter 11 einkoppeln kann. Um Licht vom Lichtleiter 11 an das Leuchtgewebe 6 weitergeben zu können, ist vorgesehen, dass ein Geweberand 12 des Leuchtgewebes 6 anhand dem Lichtleiter 11 umspritzt ist. D.h. die in diesem Bereich befindlichen beleuchtbaren Fäden 8 sind im Lichtleiter 11 eingebettet. Dadurch kann mittels der Lichtquellen 10a, 10b bereitgestelltes Licht zunächst in den ringförmigen Lichtleiter 11 eingekoppelt werden, dann zu dem Leuchtgewebe 6 geleitet werden und dann vom Lichtleiter 11 an das Leuchtgewebe 6 weitergegeben werden. Das Leuchtgewebe 6 kann anhand dem eingekoppelten Licht eine nicht wie seither nur punktuelle, sondern eine, insbesondere durch die Abmessungen des Leuchtgewebes 6 vorgegebene, flächige, d.h. insbesondere diffuse, und in alle Richtungen hin gleichmäßige Beleuchtung bereitstellen. Dadurch kann die Lautsprecherinnenbeleuchtung 1 insgesamt eine gleichmäßige Hinterleuchtung der Lautsprecherabdeckung 2 realisieren, in der Art, dass von der Lautsprecherinnenbeleuchtung 1 bereitgestelltes Licht gleichmäßig durch die zumindest eine Öffnung 3 der Lautsprecherabdeckung 2 zu einer Umgebung 25 des Lautsprechers 4 leuchtet. Dadurch kann für einen Nutzer des Lautsprechers 4 bzw. des Kraftfahrzeugs 24 ein angenehmer optischer Lichteffekt erreicht werden. Das Leuchtgewebe 6 baut dabei relativ kompakt, sodass es sich einerseits konstruktiv relativ einfach in den Lautsprecher 4 integrieren lässt und andererseits die übrigen Komponenten des Lautsprechers 4 nahezu nicht beeinflusst, wodurch insbesondere von der Lautsprechereinheit 5 des Lautsprechers 4 bereitgestellte akustische Signale praktisch nicht gedämpft und daher beim Nutzer auch ein angenehmer akustischer Klangeffekt erzeugt werden kann.

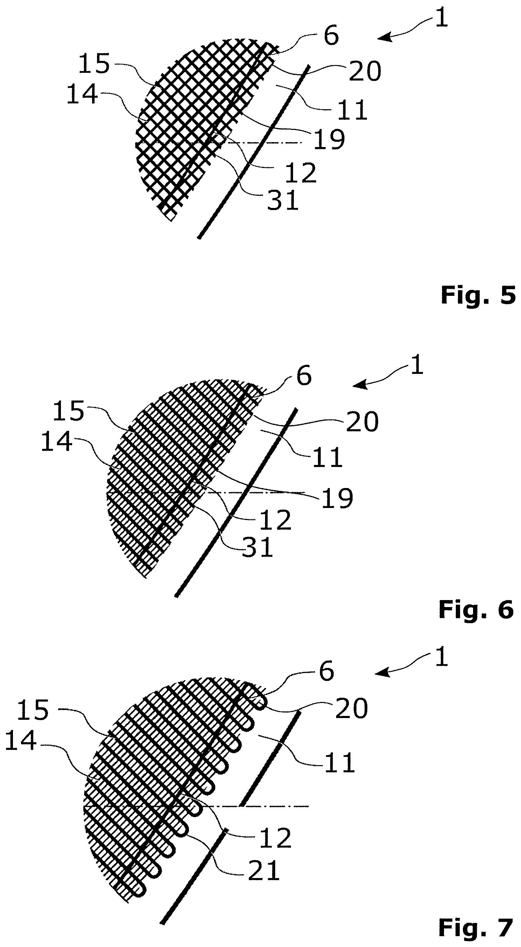

Fig. 5 zeigt einen in Fig. 4 anhand einem mit gestrichelter Linie eingezeichneten Kreis V gekennzeichneten, vergrößerten Ausschnitt der Lautsprecherinnenbeleuchtung 1 aus Fig. 4. Es ist ersichtlich, dass die beleuchtbaren Fäden 8 des Leuchtgewebes 6 sogenannte Kettenfäden 14 und zum Verbinden derselben Schussfäden 15 aufweisen. Die Kettenfäden 14 und Schussfäden 15 bilden ein gleichmäßiges Leuchtgewebe 6, kreuzen sich zweckmäßigerweise in einem Winkel von etwa oder genau 90° und sind von lichtleitenden Fasern, die auch als optische Fasern bezeichnet werden können, gebildet oder weisen dieselben auf. Die Kettenfäden 14 und die Schussfäden 15 weisen im vom Lichtleiter 11 umspritzten Geweberand 12 zum Lichtleiter 11 hin orientierte, freie Enden 19, 20 auf, die einen geschnittenen Gewebekonturrand 31 bilden, anhand welchen bereitgestelltes Licht, insbesondere relativ verlustarm in das Leuchtgewebe 6 einkoppelbar ist.

Fig. 6 zeigt einen Ausschnitt wie in Fig. 5, jedoch bei einer weiteren Ausführungsform der Lautsprecherinnenbeleuchtung 6. Das Leuchtgewebe 6 unterscheidet sich gegenüber dem aus Fig. 5 dadurch, dass es engmaschiger gestaltet ist, die Kettenfäden 14 von lichtleitenden Fasern gebildet sind oder dieselben aufweisen und die Schussfäden 15 von nichtlichtleitenden Fasern gebildet sind oder dieselben aufweisen. Anhand entsprechender Schussfäden 15 kann das Leuchtgewebe 6 beispielsweise relativ robust gestaltet werden. Die freien Enden 19, 20 der Kettenfäden 14 und der Schussfäden 15 sind wieder zum Lichtleiter 11 hin orientiert.

Fig. 7 zeigt einen Ausschnitt wie in Fig. 5, jedoch bei einer weiteren Ausführungsform der Lautsprecherinnenbeleuchtung 6. Das Leuchtgewebe 6 unterscheidet sich gegenüber dem aus Fig. 6 bekannten Leuchtgewebe 6 dadurch, dass die Kettenfäden 14 von lichtleitenden Fasern mäandrierend durch das Leuchtgewebe 6 verlaufen und im vom Lichtleiter 11 umspritzten Geweberand 12 des Leuchtgewebes 6 Schlaufen 21 bilden. Die Schussfäden 15 von nichtlichtleitenden Fasern sind wieder mit ihren freien Enden 10b zum Lichtleiter 11 hin orientiert.

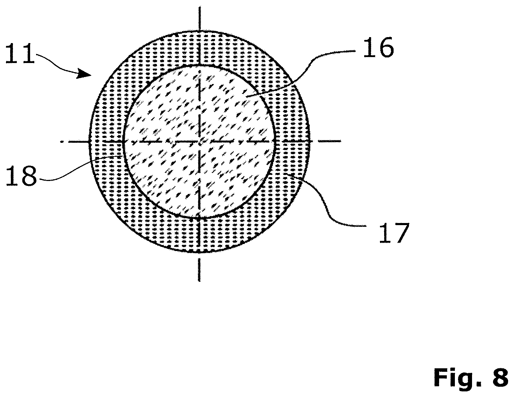

Zuletzt zeigt Fig. 8 einen Querschnitt eines Lichtwellenleiters 11 der erfindungsgemäßen Lautsprecherinnenbeleuchtung 1. Er weist einen innenliegenden Kern 16 mit einem runden Querschnitt und einem relativ hohen Lichtbrechungsindex und einen den Kern 16 außen einfassenden Kernmantel 17 mit einem relativ niedrigen Lichtbrechungsindex auf. Dadurch kann Licht relativ einfach in den Lichtwellenleiter 11 ein- und ausgekoppelt werden. Außerdem kann der Lichtwellenleiter 11 eingebrachte streuende Störungen, zum Beispiel Partikel oder dergleichen, aufweisen. Diese Störungen können insbesondere im Bereich einer Kern-Mantel-Grenzfläche 18 zwischen dem Kern 16 und dem Kernmantel 17 eingebracht sein und das Ein- und/oder Auskoppeln von Licht begünstigen.

## Patentansprüche

1. Lautsprecherinnenbeleuchtung (1) zur Hinterleuchtung einer zumindest eine Öffnung (3) aufweisenden Lautsprecherabdeckung (2) eines Lautsprechers (4), insbesondere eines Lautsprechergitters, **gekennzeichnet durch**
- ein schalldurchlässiges, zum Emittieren von Licht eingerichtetes, zwischen einer Lautsprechereinheit (5) des Lautsprechers (4) und der Lautsprecherabdeckung (2) anordenbares Leuchtgewebe (6), das von Licht emittierenden, beleuchtbaren oder selbstleuchtenden Fäden (8) gebildet ist oder dieselben aufweist.

2. Lautsprecherinnenbeleuchtung (1) nach Anspruch 1,
**gekennzeichnet durch**,
- zumindest eine Lichtquelle (10a, 10b) zum Bereitstellen von Licht,
- einen Lichtleiter (11) zum Leiten von Licht von der zumindest eine Lichtquelle (10a, 10b) zum Leuchtgewebe (6),
- wobei ein Geweberand (12) des Leuchtgewebes (6) zumindest abschnittweise oder vollständig anhand dem Lichtleiter (6) umspritzt ist.

3. Lautsprecherinnenbeleuchtung (1) nach Anspruch 2,
**dadurch gekennzeichnet, dass**
- der Lichtleiter (11) einen Kern (16) mit einem relativ hohen Lichtbrechungsindex und einen den Kern (16) einfassenden Kernmantel (17) mit einem relativ niedrigen Lichtbrechungsindex aufweist.

4. Lautsprecherinnenbeleuchtung (1) nach Anspruch 2 oder 3,
**dadurch gekennzeichnet, dass**
der Lichtleiter (11) zumindest eines der nachfolgenden Merkmale aufweist,
- er ist ringförmig gestaltet,
- er das Leuchtgewebe (6) zumindest abschnittsweise oder vollständig umläuft,
- er eine oder mehrere Einkoppelstellen (13a, 13b) zum Einkoppeln von Licht aufweist.

5. Lautsprecherinnenbeleuchtung (1) nach einem der vorhergehenden Ansprüche, **dadurch gekennzeichnet, dass**
- die beleuchtbaren Fäden (8) Kettfäden (14) und zum Verbinden derselben Schussfäden (15) aufweisen,
- wobei die Kettfäden (14) und die Schussfäden (15) von lichtleitenden Fasern gebildet sind oder dieselben aufweisen, oder
- die Kettfäden (14) von lichtleitenden Fasern gebildet sind oder dieselben aufweisen und die Schussfäden (15) von nichtlichtleitenden Fasern gebildet sind oder dieselben aufweisen.

6. Lautsprecherinnenbeleuchtung (1) nach Anspruch 5,
**dadurch gekennzeichnet, dass**
- die Kettfäden (14) und die Schussfäden (15) im vom Lichtleiter (11) umspritzten Geweberand (12) des Leuchtgewebes (6) zum Lichtleiter (11) hin orientierte, freie Enden (19, 20) aufweisen, oder
- die Kettfäden (14) mäandrierend durch das Leuchtgewebe (6) verlaufen und im vom Lichtleiter (11) umspritzten Geweberand (12) des Leuchtgewebes (6) Schlaufen (21) bilden, und/oder
- die Schussfäden (15) mäandrierend durch das Leuchtgewebe (6) verlaufen und im vom Lichtleiter (11) umspritzten Geweberand (12) des Leuchtgewebes (6) Schlaufen bilden.

7. Lautsprecherinnenbeleuchtung (1) nach Anspruch 1,
**dadurch gekennzeichnet, dass**
- die selbstleuchtenden Fäden von lichtemittierenden Fasern gebildet sind oder dieselben aufweisen,
- wobei optional die selbstleuchtenden Fäden zum Erzeugen und Emittieren von Licht mit einer Energiequelle, insbesondere einer Stromquelle, verbunden sind.

8. Lautsprecherinnenbeleuchtung (1) nach Anspruch 7,
**dadurch gekennzeichnet, dass**
- die selbstleuchtenden Fäden Kettfäden und zum Verbinden derselben Schussfäden aufweisen,
- wobei die Kettfäden und Schussfäden in einem Geweberand des Leuchtgewebes (6) freie Enden aufweisen, oder
- wobei die Schussfäden in einem Geweberand des Leuchtgewebes (6) freie Enden aufweisen und die Kettfäden mäandrierend durch das Leuchtgewebe (6) verlaufen und im Geweberand Schlaufen bilden.

9. Lautsprecher (4) aufweisend,
- eine Lautsprechereinheit (5), die zum Bereitstellen von akustischen Signalen eingerichtet ist und zumindest einen Lautsprecherkorb (22) aufweist,
- eine an der Lautsprechereinheit (5), insbesondere im Bereich des Lautsprecherkorbs (22), angeordnete oder abgestützte Stützstruktur (23),
- eine zumindest eine Öffnung (3) aufweisende Lautsprecherabdeckung (2), den Lautsprecherkorb (22) und insbesondere die Stützstruktur (23) überspannt und an der Lautsprechereinheit (5) angeordnet ist,
- eine nach einem der vorhergehenden Ansprüche 1 bis 8 ausgeführte Lautsprecherinnenbeleuchtung (1), die zwischen der Lautsprecherabdeckung (2) einerseits und der Stützstruktur (23) andererseits fixiert, insbesondere verklemmt, ist, in der Art, dass von der Lautsprecherinnenbeleuchtung (1) bereitgestelltes Licht gleichmäßig durch die zumindest eine Öffnung (3) der Lautsprecherabdeckung (2) zu einer Umgebung (25) des Lautsprechers (4) leuchten kann.

10. Kraftfahrzeug (24), das zumindest einen Lautsprecher (4) gemäß Anspruch 9 aufweist.

## Claims

1. Speaker interior illumination (1) for back-illuminating a speaker cover (2), in particular a speaker grille, having at least one opening (3), of a speaker (4), **characterized by**
- a sound-conducting luminous fabric (6) which is designed to emit light and which can be arranged between a speaker unit (5) of the speaker (4) and the speaker cover (2) and which is formed of or comprises light-emitting, illuminable or self-luminous threads (8).

2. Speaker interior illumination (1) according to claim 1,
**characterized by**
- at least one light source (10a, 10b) for providing light,
- a light guide (11) for guiding light from the at least one light source (10a, 10b) to the luminous fabric (6),
- a fabric edge (12) of the luminous fabric (6) being overmolded at least in portions or completely by the light guide (6).

3. Speaker interior illumination (1) according to claim 2,
**characterized in that**
- the light guide (11) comprises a core (16) having a relatively high refractive index, and a core casing (17) surrounding the core (16) and having a relatively low refractive index.

4. Speaker interior illumination (1) according to claim 2 or 3,
**characterized in that**
the light guide (11) comprises at least one of the following features,
- it is annular,
- it extends around the luminous fabric (6) at least in portions or completely,
- it has one or more incoupling points (13a, 13b) for coupling in light.

5. Speaker interior illumination (1) according to any of the preceding claims, **characterized in that**
- the illuminable threads (8) have warp threads (14) and, for connecting the warp threads, weft threads (15),
- the warp threads (14) and the weft threads (15) being formed of or having light-guiding fibers, or
- the warp threads (14) are formed of or have light-guiding fibers and the weft threads (15) are formed of or have non-light-guiding fibers.

6. Speaker interior illumination (1) according to claim 5,
**characterized in that**
- the warp threads (14) and the weft threads (15) in the fabric edge (12) of the luminous fabric (6), which fabric edge is overmolded by the light guide (11) have free ends (19, 20) oriented toward the light guide (11), or
- the warp threads (14) extend in a meandering manner through the luminous fabric (6) and form loops (21) in the fabric edge (12) of the luminous fabric (6), which fabric edge is overmolded by the light guide (11), and/or
- the weft threads (15) extend in a meandering manner through the luminous fabric (6) and form loops in the fabric edge (12) of the luminous fabric (6), which fabric edge is overmolded by the light guide (11).

7. Speaker interior illumination (1) according to claim 1,
**characterized in that**
- the self-luminous threads are formed of or have light-emitting fibers,
- the self-luminous threads being optionally connected to an energy source, in particular a power source, in order to generate and emit light.

8. Speaker interior illumination (1) according to claim 7,
**characterized in that**
- the self-luminous threads have warp threads and, for connecting the warp threads, weft threads,
- the warp threads and weft threads of the luminous fabric (6) having free ends in a fabric edge, or
- the weft threads having free ends in a fabric edge of the luminous fabric (6) and the warp threads extending in a meandering manner through the luminous fabric (6) and forming loops in the fabric edge.

9. Speaker (4) comprising
- a speaker unit (5) which is designed to provide acoustic signals and which has at least one speaker basket (22),
- a support structure (23) arranged or supported on the speaker unit (5), in particular in the region of the speaker basket (22),
- a speaker cover (2) which has at least one opening (3) and which spans the speaker basket (22) and in particular the support structure (23) and which is arranged on the speaker unit (5),
- a speaker interior illumination (1) according to any of the preceding claims 1 to 8, which is fixed, in particular clamped, between the speaker cover (2) and the support structure (23) such that light provided by the speaker interior illumination (1) can uniformly illuminate surroundings (25) of the speaker (4), through the at least one opening (3) of the speaker cover (2).

10. Motor vehicle (24) comprising at least one speaker (4) according to claim 9.

## Revendications

1. Éclairage intérieur de haut-parleur (1) pour le rétroéclairage d'un élément de recouvrement de haut-parleur (2) d'un haut-parleur (4), en particulier d'une grille de haut-parleur, et présentant au moins une ouverture (3), **caractérisé par**
- un tissu lumineux (6) perméable au son, configuré pour émettre de la lumière, pouvant être disposé entre une unité de haut-parleur (5) du haut-parleur (4) et l'élément de recouvrement de haut-parleur (2), lequel tissu lumineux est constitué de fils (8) émettant de la lumière, pouvant être éclairés ou luminescent, ou en présente.

2. Éclairage intérieur de haut-parleur (1) selon la revendication 1,
**caractérisé par**
- au moins une source de lumière (10a, 10b) permettant de fournir de la lumière,
- un guide de lumière (11) permettant de guider la lumière de l'au moins une source de lumière (10a, 10b) au tissu lumineux (6),
- dans lequel un bord (12) du tissu lumineux (6) est enrobé, au moins dans certaines sections ou dans son intégralité, du guide de lumière (6).

3. Éclairage intérieur de haut-parleur (1) selon la revendication 2,
**caractérisé en ce que**
- le guide de lumière (11) présente un cœur (16) comportant un indice de réfraction relativement élevé et une gaine de cœur (17) cerclant le cœur (16) et comportant un indice de réfraction relativement faible.

4. Éclairage intérieur de haut-parleur (1) selon la revendication 2 ou 3,
**caractérisé en ce que**
le guide de lumière (11) présente au moins l'une des caractéristiques suivantes,
- il a une forme annulaire,
- il entoure, au moins dans certaines sections ou dans son intégralité, le tissu lumineux (6),
- il présente un ou plusieurs points d'injection (13a, 13b) permettant d'injecter de la lumière.

5. Éclairage intérieur de haut-parleur (1) selon l'une des revendications précédentes, **caractérisé en ce que**
- les fils (8) pouvant être éclairés présentent des fils de chaîne (14) et des fils de trame (15) permettant de les relier,
- dans lequel les fils de chaîne (14) et les fils de trame (15) sont constitués de fibres guidant la lumière ou en présentent, ou
- les fils de chaîne (14) sont constitués de fibres guidant la lumière ou en présentent et les fils de trame (15) sont constitués de fibres ne guidant pas la lumière ou en présentent.

6. Éclairage intérieur de haut-parleur (1) selon la revendication 5,
**caractérisé en ce que**
- les fils de chaîne (14) et les fils de trame (15) présentent, dans le bord (12) du tissu lumineux (6) enrobé du guide de lumière (11), des extrémités libres (19, 20) orientées vers le guide de lumière (11), ou
- les fils de chaîne (14) s'étendent sous forme de méandres à travers le tissu lumineux (6) et forment des boucles (21) dans le bord (12) du tissu lumineux (6) enrobé du guide de lumière (11), et/ou
- les fils de trame (15) s'étendent sous forme de méandres à travers le tissu lumineux (6) et forment des boucles dans le bord (12) du tissu lumineux (6) enrobé du guide de lumière (11).

7. Éclairage intérieur de haut-parleur (1) selon la revendication 1,
**caractérisé en ce que**
- les fils luminescents sont constitués de fibres émettant de la lumière ou en présentent,
- dans lequel, éventuellement, les fils luminescents peuvent être reliés à une source d'énergie, en particulier une source de courant, permettant de générer et d'émettre de la lumière.

8. Éclairage intérieur de haut-parleur (1) selon la revendication 7,
**caractérisé en ce que**
- les fils luminescents présentent des fils de chaîne et des fils de trame permettant de les relier,
- dans lequel les fils de chaîne et les fils de trame présentent des extrémités libres sur un bord du tissu lumineux (6), ou
- dans lequel les fils de trame présentent des extrémités libres dans un bord du tissu lumineux (6) et les fils de chaîne s'étendent sous forme de méandres à travers le tissu lumineux (6) et forment des boucles dans le bord de tissu.

9. Haut-parleur (4) présentant,
- une unité de haut-parleur (5) configurée pour fournir des signaux acoustiques et présentant au moins une caisse de haut-parleur (22),
- une structure d'appui (23) disposée sur l'unité de haut-parleur (5) ou en appui sur celle-ci, en particulier dans la zone de la caisse de haut-parleur (22),
- un élément de recouvrement de haut-parleur (2) qui présente au moins une ouverture (3), s'étend au-dessus de la caisse de haut-parleur (22) et, en particulier, de la structure d'appui (23), et est disposé sur l'unité de haut-parleur (5),
- un éclairage intérieur de haut-parleur (1) réalisé selon l'une des revendications précédentes 1 à 8 et qui est fixé, en particulier par serrage, entre l'élément de recouvrement de haut-parleur (2) d'une part et la structure d'appui (23) d'autre part, de telle sorte que la lumière fournie par l'éclairage intérieur de haut-parleur (1) peut éclairer uniformément à travers l'au moins une ouverture (3) de l'élément de recouvrement de haut-parleur (2) donnant sur un environnement (25) du haut-parleur (4).

10. Véhicule automobile (24) présentant au moins un haut-parleur (4) selon la revendication 9.
